# EUROPÄISCHE PATENTANMELDUNG

(11) **EP 1 313 333 A1**
(43) Veröffentlichungstag der Anmeldung: **21.05.2003**
(21) Anmeldenummer: 01250402.3
(22) Anmeldetag: 14.11.2001
(51) Int. Cl.: H04Q 7/24, H04Q 3/00, H04Q 7/38

(54) **Verfahren zur Administration von Teilnehmerprofildaten in einem Mobilfunknetz**

(71) Anmelder: SIEMENS AKTIENGESELLSCHAFT, 80333 München (DE)
(72) Erfinder: Berg, Andreas, 10585 Berlin (DE); Klatt, Uwe, 13507 Berlin (DE)

(57) **Zusammenfassung**

Verfahren zur Administration von Teilnehmerprofildaten in einem Mobilfunknetz, wobei Teilnehmerprofildaten von einem Adminis-trations- oder Dienstserver (10) des Netzbetreibers aus online in die Heimatdatei einer entfernten Teilnehmerprofildatenbank (20) eingeschrieben werden.

## Beschreibung

Die Erfindung betrifft ein Verfahren zur Administration von Teilnehmerprofildaten in einem Mobilfunknetz.

In GSM-Mobilfunknetzen werden für jeden Teilnehmer in einer Heimatdatei (HLR = Home Location Register) Daten gespeichert, die u. a. darüber Auskunft geben, welche Netzwerkdienste dieser Teilnehmer in Anspruch nimmt. Ein Teil dieser Daten legt fest, unter welchen Umständen Dienste des intelligenten Netzes (IN = Intelligent Network) mit Unterstützung der CAMEL-Protokolle (CAMEL = Costumers Application of mobile in Hands Logic) für den Teilnehmer gestartet werden sollen. Dieser Datenteil wird CAMEL Subscription Indication (CSI) genannt und existiert in verschiedenen Ausprägungen wie O-CSI, D-CSI, T-CSI u. a. Bei den Diensten handelt es sich z. B. um Vorzugstarife, flexible Zuordnung der Gesprächsgebühren, Konferenzschaltungen, die Einrichtung virtueller privater Netze (VPN = Virtual Private Networks) und geschlossener Benutzergruppen, gebührenfreier Rufnummern (0800) und persönliche Rufnummern.

In den CSI-Daten werden auch verschiedene weitere Informationen abgelegt, die nähere Auskunft über die Abwicklung der zugehörigen IN-Dienste geben. Als Beispiel können hier der "ServiceKey-Parameter", der den IN-Dienst identifiziert, und der "ControllingSCF-Parameter" genannt werden. Der zuletzt genannte Parameter legt fest, welcher IN-Netzknoten die Kontrolle über den bezüglich dieser CSI gültigen IN-Dienst bekommt.

In der nunmehr umgesetzten Phase 3 des CAMEL-Standards ist die Möglichkeit geschaffen worden, mit Hilfe der Operation "Any Time Modification" (ATM) des Mobile Application Protocol (MAP) von einem entfernten Netzknoten aus auf die CSI-Daten des HLR über eine Online-Administration ändernd zuzugreifen. Die Änderungsmöglichkeiten, die mit der ATM-Operation bereitgestellt werden, sind in CAMEL Phase 3 bezüglich der CSI-Daten allerdings eng begrenzt. Es kann hier lediglich administriert werden, daß bereits eingerichtete IN-Dienste bezüglich einzelner CSI am HLR ein- oder ausgeschaltet werden.

Ein Problem stellt dabei insbesondere die sogenannte "Relokation" von z. B. IN-Prepaid-Teilnehmern dar. Durch das starke Wachstum der Teilnehmerzahlen für diesen Dienst müssen die Teilnehmer häufig durch neue oder veränderte IN-Netzknoten betreut werden. Da zur Zeit eine dynamische, einfache und zentralisierte Zuweisung von IN-Teilnehmern zu neuen oder anderen IN-Netzknoten nicht möglich ist, muss eine solche Relokation manuell am HLR vorgenommen werden. Diese Vorgehensweise ist allerdings zeit- und kostenintensiv, was sich schließlich auch in der Höhe der Nutzergebühren für den Dienst ausdrückt.

Zudem können bislang IN-Dienste (wie z. B. die sogenannten Parlay-Dienste) nicht durch den Teilnehmer wirklich eigenständig subskribiert werden, da keine Online-Methoden zur Verfügung stehen, diese Dienste auch im HLR für den jeweiligen Teilnehmer zu etablieren. Da allerdings zunächst die Einrichtung der Dienste für die Ausführung zwingend notwendig ist, kann heute nur ein Offline-Weg gewählt werden, indem z. B. ein sogenanntes Ticket erzeugt wird. Ein solches Ticket muss dann offline ausgewertet werden, um die Daten manuell am HLR einzutragen. Dieses Verfahren ist ebenfalls zeit- und administrationsaufwendig und damit teuer.

Der vorliegenden Erfindung liegt daher die Aufgabe zugrunde, ein Verfahren zur Administration von Teilnehmerprofildaten in einem Mobilfunknetz bereitzustellen, welches eine dynamische, einfache und zentralisierte Zuweisung von IN-Teilnehmern zu neuen oder anderen IN-Netzknoten und/oder IN-Diensten mit geringem Aufwand zulässt.

Diese Aufgabe wird dadurch gelöst, daß die Teilnehmerprofildaten von einem Administrations- oder Dienstserver des Netzbetreibers aus Online in die Heimatdatei einer entfernten Teilnehmerprofildatenbank eingeschrieben werden. Werden der Administrations- oder Dienstserver des Netzbetreibers zusammen mit der entfernten Teilnehmerprofildatenbank in einem üblichen Kommunikationsnetz (Fest- oder Funknetz) betrieben, können nunmehr von einem zentralen Ort eine oder mehrere Teilnehmerprofildatenbanken administriert werden.

Der Dienstserver, auf welchem die schon beschriebenen IN-Dienste (etwa Parlay-Dienste) ablaufen, kann dabei auch als Administrationsserver zur Online-Administration der Teilnehmerprofildatenbank genutzt werden. Es ist aber auch möglich, zur Administration der Teilnehmerprofildatenbank einen entfernt von dem Dienstserver betriebenen und mit dem Dienstserver kommunizierenden Administrationsserver zu benutzen.

Vorteilhafte Weiterbildungen des erfindungsgemäßen Verfahrens werden in den Unteransprüchen angegeben.

Insbesondere umfassen die Teilnehmerprofildaten Spezifikationen der IN-Dienste und/oder IN-Netzwerkknoten, welche von dem jeweiligen Teilnehmer gewünscht bzw. diesem günstigerweise zugeordnet werden. Damit ist eine dynamische und einfache Zuweisung von z. B. IN-Prepaid-Teilnehmern zu neuen oder anderen IN-Netzknoten möglich, welche sich z. B. durch starkes Wachstum der Teilnehmerzahlen für einen Dienst durch neue oder veränderte IN-Netzknoten ergeben. Es kann dabei von einem Administrations- oder Dienstserver aus jeder Teilnehmer online reloziert werden. Gleichzeitig ist auch eine Änderung der Parameter der in Anspruch genommenen IN-Dienste für diesen Teilnehmer möglich.

In bevorzugter Weise wird das Online-Einschreiben von Teilnehmerprofildaten mit der ATM(Any Time Modification)-Operation des Mobile Application Protocols (MAP) auf Basis des CAMEL-Protokoll-Standards der Phase 3 vorgenommen. Damit werden die Änderungsmöglichkeiten der ATM-Operation bezüglich der CSI-Daten am HLR mit der vorliegenden Erfindung erweitert. Es können damit nicht nur bereits eingerichtete IN-Dienste bezüglich einzelner CSI am HLR ein- oder ausgeschaltet, sondern gezielt eingerichtet und später modifiziert werden.

Von Vorteil ist es weiterhin, daß vor der Durchführung des erfindungsgemäßen Verfahrens zunächst der Teilnehmer bei einem Serviceprovider, insbesondere über einen Internetrechner, den gewünschten IN-Dienst subskribiert (Selbst-Administra-tion). Das bedeutet, daß dieser Dienst von dem Teilnehmer bei dem Serviceprovider angefordert wird, wobei in einem weiteren Schritt der gewünschte IN-Dienst von einem Administrations- oder Applikationsserver des Serviceproviders (nachfolgend einfacher bezeichnet als Applikationsserver) an den Administrations- oder Dienstserver des Netzbetreibers übermittelt wird. Damit können insbesondere Parlay-Dienste durch einen Teilnehmer eigenständig, insbesondere über ein Internet-Interface, subskribiert werden.

Der Serviceprovider richtet anschließend online z. B. über ein Application Programming Interface (API) den Dienst für den Teilnehmer am Administrations- oder Dienstserver des Netzbetreibers (Parlay-Gateway) ein. Dort stehen aber erfindungsgemäß nunmehr Online-Methoden zur Verfügung, diesen Dienst auch am HLR der Teilnehmerprofildatenbank für den Teilnehmer einzurichten. Damit kann sich auf Basis der vorliegenden Erfindung ein Parlay-Gateway z. B. online selbst über die ATM-Operation am HLR als ControllingSCF (Service Control Function) für diesen Teilnehmer eintragen. Damit erfolgt die Subskription von IN-Dienst-Teilnehmern vollautomatisch.

In bevorzugter Weise kann nach dem Online-Einschreiben der Teilnehmerprofildaten in eine entfernte Teilnehmerprofildatenbank zunächst eine Verbindungsanfrage, insbesondere von einem mobilen Endgerät eines Teilnehmers, an einem Vermittlungsrechner empfangen werden. Diese Verbindungsanfrage kann an einen IN-Dienst gerichtet sein, welcher für den Verwaltungsbereich angefordert wird, in welchem sich der Teilnehmer aufhält. In einem weiteren Schritt werden dann die Teilnehmerprofildaten aus der Heimatdatei der Teilnehmerprofildatenbank abgefragt und an eine Besucherdatei (VLR = Visitors Location Register) des Vermittlungsrechners übermittelt. Diese stehen dann lokal zur Verfügung und werden in einem weiteren Schritt zum Aufbauen einer Verbindung zwischen dem Vermittlungsrechner und einem IN-Netzwerkknoten zur Nutzung des IN-Dienstes ausgewertet. Damit wird dem Teilnehmer ein Zugang zu dem gewünschten IN-Dienst auf dem für ihn im HLR allozierten IN-Netzwerkknoten ermöglicht.

In besonders bevorzugter Weise wird nach dem zuletzt genannten Verfahrensschritt weiterhin das Übermitteln von Verbindungsdaten, insbesondere der rufenden und angerufenen Nummer sowie der Nutzungszeit eines Dienstes, vom Parlay-Server des Netzbetreibers an den Applikationsserver des Serviceproviders durchgeführt. Damit kann auf einfache Weise eine differenzierte Vergebührung der Dienstleistungen des Providers durchgeführt werden.

Die Vorteile der Erfindung kommen zum Tragen, wenn das Online-Einschreiben von Teilnehmerprofildaten in die Heimatdatei der Teilnehmerprofildatenbank ein Hinzufügen, ein Löschen oder ein Ändern von Teilnehmerprofildaten umfaßt. Zusammen mit der Abfragemöglichkeit von Teilnehmerprofildaten stehen damit alle Datenbankoperationen online zur Verfügung, welche eine vollständige und umfassende Teilnehmeradministration gewährleisten.

Die Teilnehmerprofildaten umfassen speziell CSI-Daten des CAMEL-Protokolls, insbesondere in den Ausprägungen O-CSI, D-CSI oder T-CSI. Damit werden alle wesentlichen Varianten des CAMEL-Protokolls abgedeckt.

Bevorzugt ist es in Anbetracht etablierter Protokolle, wenn die Teilnehmerprofildaten CSI-Daten des CAMEL-Protokolls, insbesondere die Parameter newControllingSCF und newServiceKey umfassen. Über den Parameter newControllingSCF kann dabei eine Zuweisung von Teilnehmern zu neuen oder anderen IN-Netzknoten, über den Parameter newServiceKey eine Zuordnung von Teilnehmern zu neuen oder geänderten Diensten vorgenommen werden.

Im folgenden wird das erfindungsgemäße Verfahren anhand eines Ausführungsbeispiels näher erläutert.

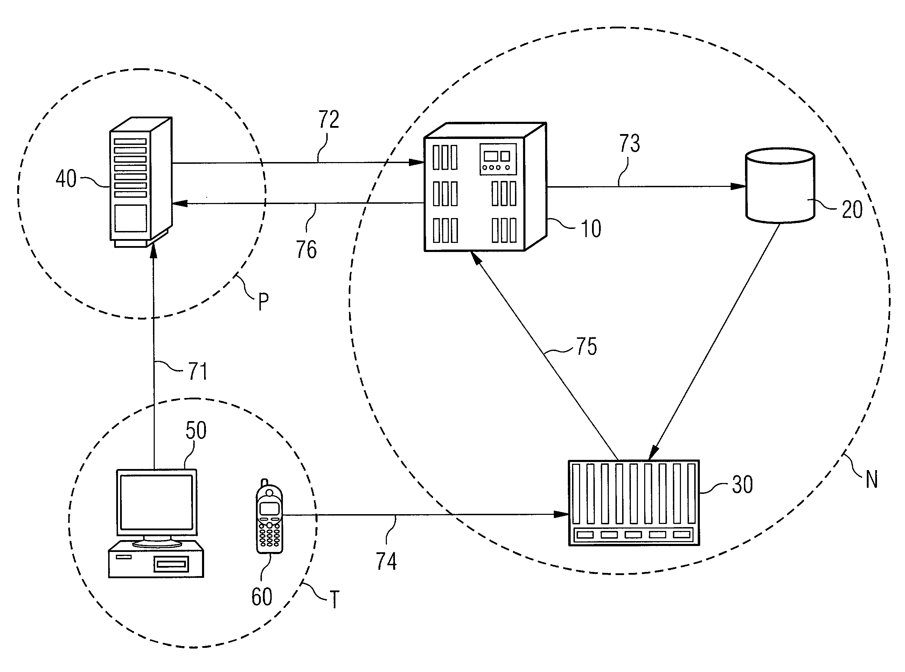

Die einzige Figur zeigt eine Anordnung aus Administrationsoder Dienstserver 10, Teilnehmerprofildatenbank 20 und Vermittlungsrechner 30 im Administrationsbereich des Netzbetreibers N sowie einen Administrations- oder Applikationsserver 40 im Zuständigkeitsbereich des Service-Providers P und einen Internetrechner 50 sowie ein mobiles Endgerät 60 im Bereich des Teilnehmers T. Der Administrations- oder Dienstserver 10 ist in dieser Variante als OSA(Open Software Architecture)/Parlay-Gateway ausgelegt.

In einem ersten Schritt des erfindungsgemäßen Verfahrens kann ein Teilnehmer T z. B. einen Parlay-Dienst bei einem Service-Provider P über den Internetrechner 50 und eine Kommunikationsstrecke 71 subskribieren. Die Subskription wird auf dem Administrations- oder Applikationsserver 40 des Serviceproviders P entgegen genommen und über eine Kommunikationsstrecke 72 an den Administrations- oder Dienstserver 10 des Netzbetreibers N übermittelt. Der Applikations- oder Dienstserver 10 des Netzbetreibers N wird über die Operation Enable Call Modification des OSA-Protokolls angesprochen und mit der entsprechenden Nutzeradresse (User Address) versorgt.

Das Parlay-Gateway ist dabei gleichzeitig als Administrationsserver zum Online-Einschreiben der Teilnehmerprofildaten über eine Kommunikationsstrecke 73 in das Home Location Register der Teilnehmerprofildatenbank 20 ausgelegt. Das Einschreiben geschieht über das MAP-Protokoll und die ATM-Operation mit den Parametern User Address, newServiceKey und newControllingSCF, welche in diesem Fall gleich der Adresse des Gateways ist. Die Angaben zum Teilnehmer bzw. dessen Nutzerprofil werden im Home Location Register der Teilnehmerprofildatenbank 20 gespeichert.

Möchte nun der Teilnehmer T über das mobile Endgerät 60 den subskribierten Parlay-Dienst nutzen, wird zunächst über eine Kommunikationsstrecke 74 eine Verbindungsanfrage an den Vermittlungsrechner 30 geschickt, welcher in einem weiteren Schritt vom HLR der Teilnehmerprofildatenbank 20 die Teilnehmerprofildaten erfragt und in seinem VLR speichert. Das HLR übergibt dem VLR alle Teilnehmerprofildaten, die notwendig sind, um lokal dem Teilnehmer seinen gewünschten Dienstzugang zu ermöglichen.

Das HLR ist außerdem dafür verantwortlich, dem alten VLR den Auftrag zum Löschen der Teilnehmerprofildaten zu erteilen, wenn die Aufenthaltsaktualisierung eines neuen VLR eintrifft. Dies geschieht über die Funktionen Cancel Location und Insert Subscriber Data mit den Parametern User Adress, newControllingSCF und dem entsprechenden newServiceKey. Vom Vermittlungsrechner 30 wird über eine Kommunikationsstrecke 75 eine Verbindung zu dem Parlay-Gateway 10 hergestellt, welches den angeforderten Dienst zur Verfügung stellt. Dies geschieht über das INAP(Intelligent Network Application Port)-Protokoll mit Hilfe der Operation InitialDP und dem Parameter User Address.

Zur Vergebührung des hier vom Teilnehmer T genutzten Parlay-Dienstes wird über eine Kommunikationsstrecke 76 und die Operation Call Event Notify des OSA-Protokolls mit dem Parameter User Address sowie wenigstens der Nutzungszeit des Dienstes eine entsprechende Abrechnung auf dem Administrations- oder Dienstserver 40 des Serviceproviders P erstellt.

Durch die erfindungsgemäße Online-Administration von Teilnehmerprofildaten im HLR der Teilnehmerprofildatenbank 20 von dem Administrations- oder Dienstserver 10 des Netzbetreibers N aus wird weiterhin eine dynamische, einfache und zentralisierte Relokation von z. B. IN-Prepaid-Teilnehmern zu neuen oder anderen IN-Netzknoten möglich. Diese müssen lediglich im HLR der Teilnehmerprofildatenbank 20 als neuer new-ControllingSCF-Parameter online eingeschrieben werden, um eine Verbindung eines Teilnehmers T von dem Vermittlungsrechner 30 auf einen anderen als den hier dargestellten Administrations- oder Dienstserver 10 eines Netzbetreibers N zu lenken.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

## Patentansprüche

1. Verfahren zur Administration von Teilnehmerprofildaten in einem Mobilfunknetz,
**dadurch gekennzeichnet, dass**
Teilnehmerprofildaten von einem Administrations- oder Dienstserver (10) des Netzbetreibers aus online in die Heimatdatei einer entfernten Teilnehmerprofildatenbank (20) eingeschrieben werden.

2. Verfahren nach Anspruch 1,
**dadurch gekennzeichnet, dass**
die Teilnehmerprofildaten Identifikatoren bzw. Parameter von IN-Diensten und/oder IN-Netzwerkknoten umfassen.

3. Verfahren nach Anspruch 1 oder 2,
**dadurch gekennzeichnet, dass**
das Online-Einschreiben von Teilnehmerprofildaten mit der ATM-Operation des Mobile Application Protocols auf Basis des CAMEL-Protokoll-Standards der Phase 3 vorgenommen wird.

4. Verfahren nach einem der vorhergehenden Ansprüche,
**dadurch gekennzeichnet, dass**
vorab die folgenden weiteren Schritte durchgeführt werden:
a1) Subskribieren des gewünschten IN-Dienstes durch den Teilnehmer bei einem Service-Provider, insbesondere über einen Internetrechner (50);
a2) Übermitteln eines Identifikators bzw. von Parametern des gewünschten IN-Dienstes von einem Applikationsserver (40) des Service-Providers an den Administrations- oder Dienstserver (10) des Netzbetreibers.

5. Verfahren nach einem der vorhergehenden Ansprüche,
**dadurch gekennzeichnet, dass**
anschließend an das Einschreiben der Teilnehmerprofildaten die folgenden weiteren Schritte durchgeführt werden:
b1) Empfangen einer Verbindungsanfrage, insbesondere von einem mobilen Endgerät (60) eines Teilnehmers, an einen Vermittlungsrechner (30);
b2) Abfragen und Übermitteln der Teilnehmerprofildaten aus der Heimatdatei der Teilnehmerprofildatenbank (20) an eine Besucherdatei des Vermittlungsrechners (30) und
b3) Aufbauen einer Verbindung zwischen dem Vermittlungsrechner (30) und einem IN-Netzwerkknoten zur Nutzung eines IN-Dienstes auf Basis der Teilnehmerprofildaten.

6. Verfahren nach Anspruch 5,
**dadurch gekennzeichnet, dass**
nach dem Verfahrensschritt b3) das Übermitteln von Verbindungsdaten, insbesondere der rufenden und angerufenen Nummer sowie der Nutzungszeit eines Dienstes, vom Administrationoder Dienstserver (10) des Netzbetreibers an den Applikationsserver (40) des Service-Providers durchgeführt wird.

7. Verfahren nach einem der vorhergehenden Ansprüche,
**dadurch gekennzeichnet, dass**
das Einschreiben von Teilnehmerprofildaten in die Heimatdatei der Teilnehmerprofildatenbank (20) ein Einfügen, ein Löschen oder ein Ändern der Teilnehmerprofildaten umfasst.

8. Verfahren nach einem der vorhergehenden Ansprüche,
**dadurch gekennzeichnet, dass**
die Teilnehmerprofildaten CSI-Daten des CAMEL-Protokolls, insbesondere in den Ausprägungen O-CSI, D-CSI oder T-CSI, umfassen.

9. Verfahren nach einem der vorhergehenden Ansprüche,
**dadurch gekennzeichnet, dass**
die Teilnehmerprofildaten CSI-Daten des CAMEL-Protokolls, insbesondere die Parameter newControllingSCF und newServiceKey sind.
